**Europäisches Patentamt**

**European Patent Office**

**Office européen des brevets**

(11) Veröffentlichungsnummer : **0 184 833**
**B1**

(12) **EUROPÄISCHE PATENTSCHRIFT**

(45) Veröffentlichungstag der Patentschrift :
28.09.88

(51) Int. Cl.⁴ : **B 25 J   9/00**

(21) Anmeldenummer : **85115770.1**

(22) Anmeldetag : **11.12.85**

(54) **Mehrachsiger, programmierbarer Manipulator mit einem Trainingsarm zum Programmieren des Manipulators.**

(30) Priorität : **11.12.84 DE 3445055**

(43) Veröffentlichungstag der Anmeldung :
**18.06.86 Patentblatt 86/25**

(45) Bekanntmachung des Hinweises auf die Patenterteilung : **28.09.88 Patentblatt 88/39**

(84) Benannte Vertragsstaaten :
**AT BE CH DE FR GB IT LI NL SE**

(56) Entgegenhaltungen :
**EP-A- 0 078 522**
**DE-A- 2 850 421**
**US-A- 4 372 721**

(73) Patentinhaber : **Reis GmbH & Co**
**Im Weidig 1-4**
**D-8753 Obernburg (DE)**

(72) Erfinder : **Reis, Walter**
**Frankenstrasse 1**
**D-8753 Obernburg (DE)**
Erfinder : **Langner, Karlheinz, Dipl.-Ing.**
**An der Senne 42**
**D-8751 Mainaschaff (DE)**
Erfinder : **Pfenning, Udo**
**Bayernstrasse 17**
**D-8753 Obernburg (DE)**

(74) Vertreter : **Gudel, Diether, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz Grosse Eschenheimer Strasse 39**
**D-6000 Frankfurt am Main 1 (DE)**

## Beschreibung

Die Erfindung betrifft einen mehrachsigen, programmierbaren Manipulator mit einem entsprechend mehrachsigen Trainingsarm zum Programmieren des Manipulators (siehe US-A-4372721).

Programmierbare Manipulatoren werden heute für viele Zwecke eingesetzt. Zum programmieren verwendet man hierbei auch einen sogenannten Trainingsarm, der bezüglich seiner Achsen, Abmessungen usw. grundsätzlich wie der Manipulator aufgebaut ist. Der Trainingsarm wird dann an diejenige Stelle gesetzt, wo sich später der eigentliche Manipulator befinden soll und man führt die entsprechenden Bewegungen am Trainingsarm durch, wodurch das Programm geschrieben wird. Dieses Programm wird später vom Manipulator ausgeführt, nachdem dieser an seiner Arbeitsstelle montiert worden ist und Manipulator führt dann die Bewegungen entsprechend dem Programm durch.

Dieses Prinzip hat sich an und für sich bewährt. Es ist aber insoweit umständlich zu handhaben, als zunächst der Manipulator abgebaut werden muß, worauf man den Trainingsarm an dessen Stelle setzen kann. Hierbei muß genauesten darauf geachtet werden daß die Basis des Trainingsarms sich an demselben Ort befindet wie die Basis des Manipulators, andernfalls man diesen Versatz im Programm berücksichtigen muß.

Es ist auch möglich, den Manipulator an Ort und Stelle zu belassen und den Trainingsarm neben ihm aufzubauen, wobei der Versatz zwischen dem Manipulator und dem Trainingsarm dann ebenfalls im Programm berücksichtigt werden muß. Diese Verfahrensweise ist aber nur dann möglich, wenn der Manipulator die Bewegungen des Trainingsarms nicht stört.

Allen bekannten Verfahrensweisen haftet daher der Nachteil an, daß der Manipulator vom Programm fehlerbehaftet geführt wird, wenn nämlich der Versatz zwischen dem Manipulator und dem Trainingsarm nicht genau genug berücksichtigt wird, sowie auch ein zusätzlicher Arbeitsaufwand, bedingt durch das mehrmalige Montieren und Demontieren des Manipulators und des Trainingsarms und auch durch zusätzliche Eingaben in das Programm zur Berücksichtigung des Versatzes.

Die Erfindung vermeidet diese Nachteile. Ihr liegt die Aufgabe zugrunde, einen Manipulator der eingangs genannten Art vorzuschlagen, bei dem der zugehörige Trainingsarm zwangsweise Positionen abfährt, die mit den Positionen des Manipulators identisch sind.

Zur Lösung dieser Aufgabe ist die Erfindung dadurch gekennzeichnet, daß der Trainingsarm am Manipulator derart befestigt werden kann, daß die erste Achse des Trainingsarms ständig in der Verlängerung der ersten Achse des Manipulators liegt und daß der durch diese Befestigung bewirkte Versatz der zweiten Achse des Trainingsarms relativ zur zweiten Achse des Manipulators am Trainingsarm mechanisch kompensiert ist.

Man stellt somit den Manipulator am gewünschten Ort auf, schwenkt seinen die zweite und folgende Achsen tragenden Arm, so daß diese Bauteile nicht mehr im Wege stehen, und befestigt dann den Trainingsarm an demjenigen Bauteil des Manipulators, an dem die erste Achse ausgebildet ist. Bei Aufstellung des Manipulators auf dem Boden wird dies die lotrechte Achse sein. Der Trainingsarm wird somit an einem definierten Punkt des Manipulators befestigt, wobei dieser Punkt so ausgewählt ist, daß die beiden ersten Achsen des Manipulators und des Trainingsarms zusammenfallen. In diesen ersten Achsen gibt es somit keinerlei Versatz zwischen beiden Teilen. Aus konstruktiven Gründen ist es aber nicht möglich, die zweite Achse des Trainingsarms mit der zweiten Achse des Manipulators zusammenfallen zu lassen, und zwar weil man sonst nicht die beiden ersten Achsen der beiden Bauteile zusammenfallen lassen könnte. Um den dadurch bedingten, konstanten Versatz zu kompensieren, ist am Trainingsarm eine entsprechende mechanische und daher ständig und selbsttätig wirkende Kompensation vorgesehen.

Für diese Kompensation werden zwei Möglichkeiten bevorzugt. Die erste dadurch gekennzeichnet, daß eine Parallelogrammgestänge auf die erste Achse des Trainingsarms aufgesetzt ist, das ein Verbindungsstück trägt, an dem die dritte Achse ausgebildet ist und das den Versatz kompensiert.

Die zweite Möglichkeit ist dadurch gekennzeichnet, daß an der ersten Achse des Trainingsarms ein Bügel befestigt ist, an dem die zweite Achse des Trainingsarms in einer Verlängerung der zweiten Achse des Manipulators ausgebildet ist.

Man kann den Trainingsarm auch getrennt vom Manipulator verwenden, weil der Trainingsarm an seiner Basis nur geeignete Befestigungsmittel zum Befestigen des Trainingsarms am Manipulator haben muß. Eine weitere Ausführungsform ist daher dadurch gekennzeichnet, daß ein Gestell vorgesehen ist, an dem der Trainingsarm in einer Höhe befestigt werden kann, die der Höhe des Befestigungspunktes des Trainingsarms am Manipulator entspricht. Man kann daher den Trainingsarm ohne zusätzlichen Aufwand auch vom Manipulator getrennt zur Programmierung verwenden, wobei durch die angegebenen Merkmale dafür gesorgt wird, daß sich der Trainingsarm auf dem Gestell auf der gleichen Höhe befindet wie am Manipulator, so daß hier kein Höhenversatz zusätzlich zu berücksichtigen ist.

Um das Eichen des Trainingsarms zu erleichtern wird es außerdem bevorzugt, wenn das in der Reihenfolge der Achsen letzte Bauelement des Trainingsarms in einer definierten Lage lösbar an der Basis des Trainingsarms befestigbar ist. In dieser definierten Stellung haben daher alle Achsen und Bauelemente des Trainingsarms eine definierte und reproduzierbare Lage, von der ausgehend man dann das Programmieren beginnen kann. Dies kann man als Programm-Nullage bezeichnen.

Die Erfindung wird im folgenden anhand von Ausführungsbeispielen näher erläutert, aus denen sich weitere wichtige Merkmale ergeben. Es zeigt :

Fig. 1 - eine Ansicht des Trainingsarms mit angedeuteter Befestigung auf demjenigen Bauelement des zugehörigen Manipulators, an dem die erste (lotrechte) Achse ausgebildet ist ;

Fig. 2 - den Trainingsarm nach Fig. 1 in einer demgegenüber um 90° verschwenkten Ansicht ;

Fig. 3 - schematisch eine Ansicht entsprechend Fig. 2 bei einer abgeänderten Ausführungsform zur Kompensation des Versatzes ;

Fig. 4 - ebenfalls schematisch die lösbare Befestigung des letzten Elementes des Trainingsarms an dessen Basis.

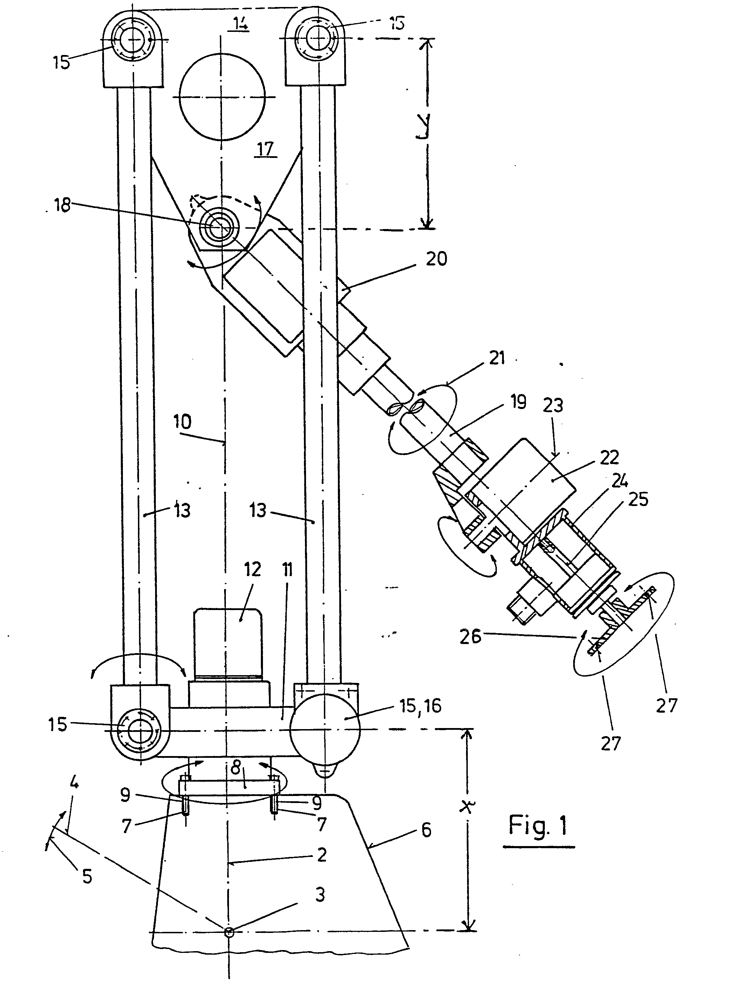

Zuvor sei bemerkt, daß der Manipulator in Fig. 1 nur in Teilen angedeutet ist ; er ist grundsätzlich mit denselben Achsen aufgebaut wie der im folgenden beschriebene Trainingsarm.

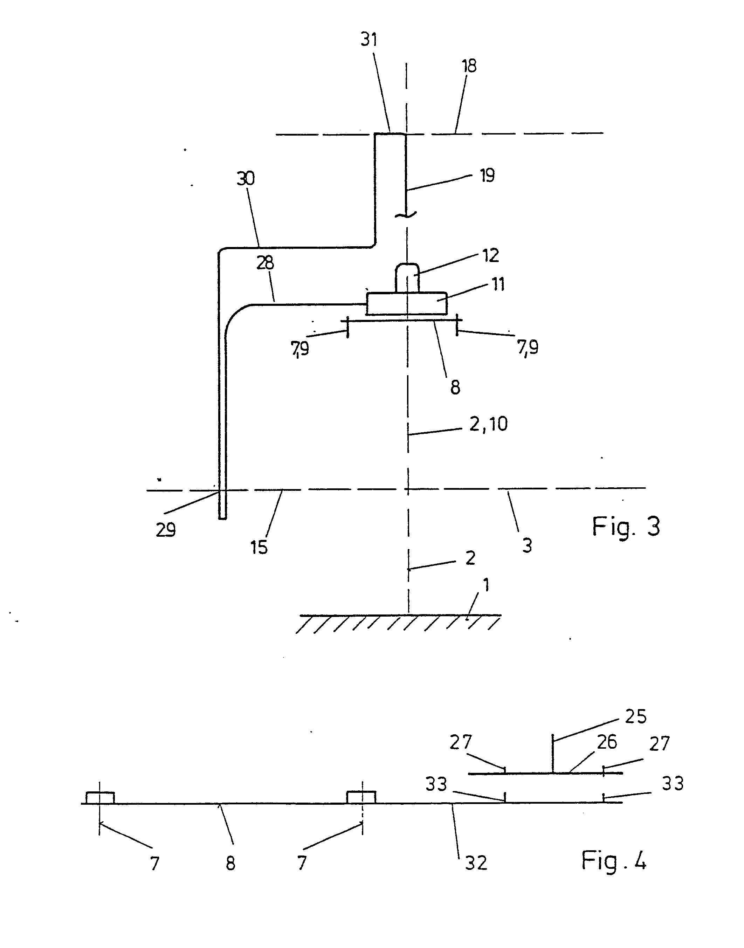

Der Manipulator steht auf einem Boden 1 auf (vgl. auch Fig. 3), wo er mit einer ersten, lotrechten Achse 2 ausgebildet ist. Senkrecht dazu erstreckt sich eine zweite Achse 3 des Manipulators. In Fig. 1 ist auch noch angedeutet ein Schwenkarm 4, der um die dritte Achse 3 in Richtung des Pfeiles 5 geschwenkt werden kann.

Die ersten Achse 2 ist an einem Bauteil 6 des Manipulators ausgebildet, das über eine Bodenplatte schwenkbar um diese erste Achse auf den Boden aufgestellt ist.

Auf der Oberseite des Bauteils 6 ist ein definierter Befestigungspunkt für einen Trainingsarm ausgebildet. Dies geschieht beispielsweise durch Spannbolzen 7, die an einer Grundplatte 8 des Trainingsarms befestigt sind und die an definierten Stellen in entsprechenden Sacklöchern 9 des Bauteils 6 befestigt werden können. Diese Befestigung ist so ausgebildet, daß eine erste Achse 10 des Trainingsarms mit der ersten Achse 2 des Manipulators zusammenfällt.

Auf die Grundplatte 8 des Trainingsarms ist eine Platte 11 aufgesetzt, die über einen Motor 12 um die Achse 2, 10 zur Grundplatte 8 geschwenkt werden kann.

Die Platte 11 ist Teil eines Parallelogrammgestänges mit Stangen 13 und einer oberen Verbgindungsstange 14. An den vier Ecken dieses Parallelogrammgestänges 11, 13, 13, 14 sind Gelenke 15 vorgesehen, über die das Parallelogrammgestänge verschwenkbar ist. Eines der Gelenke ist mit einem Motor 16 versehen.

Die obere Verbindungsstange 14 ist zu einem im wesentlichen dreieckförmigen Verbindungsstück 17 ergänzt, an dem eine dritte Achse 18 ausgebildet ist. In dieser Achse ist ein Gelenkarm 19 des Trainingsarms drehbar befestigt. Dieser ist über einen Motor 20 zur Ausbildung einer vierten Achse 21 drehbar.

Am Ende des Gelenkarmes 19 sitzt ein weiterer Motor 22 zur Ausbildung einer fünften Achse 23. Daran wiederum ist ein Motor 24 befestigt, der eine sechste Achse 25 ausbildet. Am Ende dieses Armes schließlich sitzt ein Bauteil 26, das beispielsweise als Scheibe ausgebildet ist, und an dem ein Werkzeug befestigt werden kann. Die Scheibe hat wenigstens zwei Löcher 27.

Fig. 1 zeigt, daß zwischen der zweiten Achse 3 des Manipulators und der zweiten Achse 15, 16 des Trainingsarms ein Versatz X besteht. Zur Kompensierung dieses Versatzes ist derselbe Versatz Y zwischen den oberen Gelenkpunkten 15 des Parallelogrammgestänges und der dritten Achse 18 vorgesehen.

Verschwenkt man daher das Parallelogrammgestänge aus der gezeigten lotrechten Lage, so führt die Achse 18 eine Bewegung aus, die identisch mit der Bewegung ist, die sie ausführen würde, wenn die Achse 18 an einem Gelenkarm befestigt wäre, dessen unterer Drehpunkt mit der Achse 3 zusammenfiele. Es ist also ersichtlich, daß durch die getroffene Anordnung der Höhenversatz X durch den Höhenversatz Y kompensiert wird.

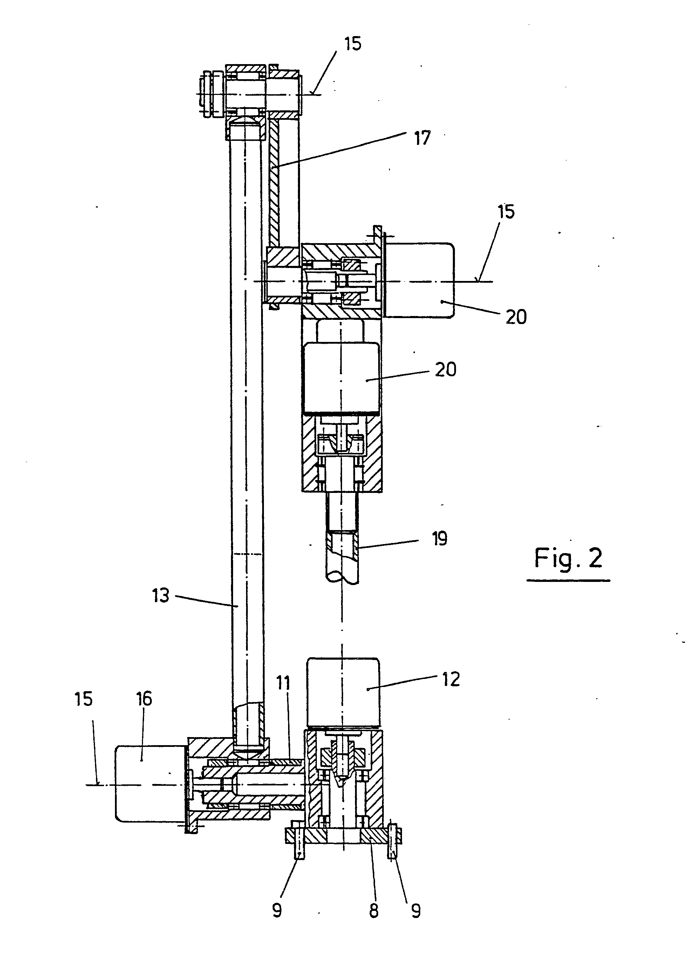

Fig. 3 zeigt eine alternative Anordnung, wobei an der Platte 11 ein Bügel 28 befestigt ist, der seitlich neben das Bauteil 6 bis zur zweiten Achse 3 geführt ist. Dort wird also die zweite Achse 15 des Trainingsarms an diesem Bügel 28 ausgebildet und an diesem Gelenkpunkt 29 des Bügels, der mit den Achsen 3, 15 zusammenfällt, greift eine Stange 30 an, an deren oberen Ende die dritte Achse 18 ausgebildet ist. Hier ist ein Verbindungsstück 31 vorgesehen, das die Gelenkpunkte miteinander verbindet, die die Stange 30 und den daran ansetzenden Gelenkarm 19 miteinander verbinden. Die weitere Ausbildung, anschließend an den Gelenkarm 19 ist wie vorstehend anhand von Fig. 1 und 2 beschrieben.

Es ist somit ersichtlich, daß der Bügel 28 bewirkt, daß die Achse 15 mit Achse 3 zusammenfällt und natürlich nach wie vor auch die Achse 2 mit der Achse 10. Der Bügel 28 umgeht das Bauteil 6 bzw. an dieses Bauteil angeflanschte Motoren und dergleichen.

Der Manipulator und auch der Trainingsarm haben übliche Kodierelemente, Winkelmeßgeräte und dergleichen.

Fig. 4 zeigt, daß an der Grundplatte 8 ein Arm 32 befestigt ist, der seitlich von der Grundplatte absteht. Auf der Oberseite des Armes sind an diesem zwei Stifte 33 befestigt, deren Abstand dem Abstand der Löcher 27 des Bauteils 26 entspricht. Man kann daher das Bauteil 26 relativ zur Grundplatte 8 des Trainingsarms lösbar fixieren und damit auch alle anderen Elemente des Tragarmes.

Der beschriebene Tragarm mit seiner Befestigung am Manipulator ergibt somit ein mehrachsiges, kinematisches Ersatzmodell des Manipulators, hergestellt in Leichtbauweise, mit unabhängig voneinander schwenkbaren Armen. Er hat außerdem einen — zeichnerisch nicht dargestellten — Handgriff mit integrierten Bedienungselementen zur Auslösung der Bahnaufnahme. Die Adaption des Trainingsarms direkt am Drehpunkt der ersten Achse auf dem Manipulator vermeidet aufwendige Rechenverfahren und zusätzliche Ungenauigkeiten zwischen der mittels des Trainingsarms abgefahrenen Kontur und der vom Industrieroboter abgefahrenen Bahn. Der Trainingsarm kann, im Gegensatz zu einem separaten Leergerüst, ohne zusätzlichen Aufwand auch bei über Kopf Installation des Manipulators eingesetzt werden oder in sonstiger beliebiger Lage. Der Manipulator braucht von seinem normalen Aufstellungsort zwecks Programmierung nicht entfernt zu werden. Es müssen lediglich sein Hauptachsen aus dem Arbeitsraum verschwenkt werden. Die Kinematik des Trainingsarms ist so gestaltet, daß sie den Versatz der Achsen zwischen Roboter und Trainingsarm mechanisch kompensiert. Die Bewegung des Werkzeugmittelpunktes zwischen dem Roboter und dem Trainingsarm ist analog, obwohl der Drehpunkt der zweiten Achse des Trainingsarms nicht identisch ist mit dem Drehpunkt der zweiten Achse des Industrie-roboters. Schließlich kann das Referieren bzw. Eichen des Trainingsarms mittels der mechanische Lehre nach Fig. 4 erreicht werden, mit der alle Achsen gleichzeitig in ihrer mechanische Nullage sind. Der Trainingsarm kann wahlweise am Manipulator oder auf einem gesonderten Gestell gleicher Höhenabmessung wie der Flanschpunkt am Manipulator separat zur Programmierung benutzt werden.

Die aktuelle Position der ersten Achse des Manipulators ist zu jedem Zeitpunkt bekannt und kann entsprechend verrechnet werden, so daß die Stellung der ersten Achse beliebig sein kann.

Insbesondere Fig. 2 läßt erkennen, daß auch die Achse des Gelenkarmes 19, d. h. die sechste Achse 25, in einer Ebene verschwenkt werden kann, die durch die Achsen 2, 3 definiert ist.

## Patentansprüche

1. Mehrachsiger, programmierbarer Manipulator mit einem entsprechend mehrachsigen Trainingsarm zum Programmieren des Manipulators, dadurch gekennzeichnet, daß der Trainingsarm am Manipulator derart befestigt werden kann, daß die erste Achse (10) des Trainingsarms ständig in der Verlängerung der ersten Achse (2) des Manipulators liegt und daß der durch diese Befestigung bewirkte Versatz (X) der zweiten Achse (15) des Trainingsarms relativ zur zweiten Achse (3) des Manipulators am Trainingsarm mechanisch kompensiert ist.

2. Manipulator nach Anspruch 1, dadurch gekennzeichnet, daß ein Parallelogrammgestänge (11, 13, 13, 14) auf die erste Achse (10) des Trainingsarms aufgesetzt ist, das ein Verbindungsstück (17) trägt, an dem die dritte Achse (18) ausgebildet ist und das den Versatz (X) kompensiert.

3. Manipulator nach Anspruch 1, dadurch gekennzeichnet, daß an der ersten Achse (10) des Trainingsarms ein Bügel (28) befestigt ist, an dem die zweite Achse (15) des Trainingsarms in einer Verlängerung der zweiten Achse (3) des Manipulators ausgebildet ist.

4. Manipulator nach einem der Ansprüche 1-3, dadurch gekennzeichnet, daß ein Gestell vorgesehen ist, an dem der Trainingsarm in einer Höhe befestigt werden kann, die der Höhe des Befestigungspunktes des Trainingsarms am Manipulator entspricht.

5. Manipulator nach einem der Ansprüche 1-4, dadurch gekennzeichnet, daß das in der Reihenfolge der Achsen letzte Bauelement (26) des Trainingsarms in einer definierten Lage lösbar an der Basis (8) des Trainingsarms befestigbar ist.

## Claims

1. Multi-axis programmable manipulator comprising a corresponding multi-axis training arm for programming the manipulator, characterized in that the training arm may be mounted in such way on the manipulator that the first axis (10) of the training arm is constantly positioned in the extension of the first axis (2) of the manipulator, and that the displacement (X) of the second axis (15) of the training arm relative to the second axis (3) of the manipulator and being effected by this mounting mechanically is compensated at the training arm.

2. Manipulator according to claim 1, characterized in that a parallelogramme structure (11, 13, 13, 14) is put onto the first axis (10) of the training arm carrying a connecting piece (17) on which the third axis (18) is provided and compensating the displacement (X).

3. Manipulator according to claim 1, characterized in that at the first axis (10) of the training arm a yoke (28) is fastened at which the second axis (15) of the training arm is provided in an extension of the second axis (3) of the manipulator.

4. Manipulator according to any of claims 1 to 3, characterized in that a framework is provided on which the training arm may be mounted at a height which is corresponding to the height of the fastening point of the training arm at the manipulator.

5. Manipulator according to any of claims 1 to 4, characterized in that the construction element (26) of the training arm being the last one in the succession of the axes, can be mounted releasably at the base (8) of the training arm in a defined position.

## Revendications

1. Manipulateur multiaxe programmable pourvu d'un bras multiaxe d'apprentissage correspondant pour la programmation du manipulateur, caractérisé en ce que le bras d'apprentissage peut être fixé sur le manipulateur de telle sorte que le premier axe (10) du bras d'apprentissage se trouve constamment dans le prolongement du premier axe (2) du manipulateur et que le deport relatif (X) du deuxième axe (15) du bras d'apprentissage au deuxième axe (3) du manipulateur résultant de cette fixation est compensé par des moyens mécaniques sur le bras d'apprentissage.

2. Manipulateur selon la revendication 1, caractérisé en ce que une tringlerie en forme de parallélogramme (11, 13, 13, 14) est montée sur le premier axe (10) du bras d'apprentissage et supporte un élément de liaison (17) destiné à former le troisième axe (18) et à compenser le dépôt (X).

3. Manipulateur selon la revendication 1, caractérisé en ce qu'une fourchette (28) est fixée sur le premier axe (10) du bras d'apprentissage et sert à former le deuxième axe (15) du bras d'apprentissage dans un prolongement du deuxième axe (3) du manipulateur.

4. Manipulateur selon l'une des revendications 1 à 3, caractérisé en ce qu'un bâti est prévu pour la fixation du bras d'apprentissage à une certaine hauteur correspondant à la hauteur du point de fixation du bras d'apprentissage sur le manipulateur.

5. Manipulateur selon l'une des revendications 1 à 4, caractérisé en ce que le dernier élément de construction (26) du bras d'apprentissage dans la succession des axes est détachable dans une position définie et peut être fixée sur la base (8) du bras d'apprentissage.

0 184 833

Fig. 1

0 184 833

Fig. 2

2

Fig. 3

Fig. 4